# EUROPEAN PATENT APPLICATION

(11) **EP 4 542 719 A1**
(43) Date of publication of application: **23.04.2025**
(21) Application number: 22946802.0
(22) Date of filing: 15.06.2022
(51) Int. Cl.: H01M 10/0587, H01M 4/04, H01M 4/139, H01M 10/04

(54) **SECONDARY BATTERY AND SECONDARY BATTERY MANUFACTURING METHOD**

(71) Applicant: TERAWATT TECHNOLOGY K.K., Yokohama-shi, Kanagawa 226-0026 (JP)
(72) Inventor: IMOTO, Hiroshi, Yokohama-shi, Kanagawa 226-0026 (JP); OYAMA, Gosuke, Yokohama-shi, Kanagawa 226-0026 (JP); OGATA, Ken, Yokohama-shi, Kanagawa 226-0026 (JP); MIYAKE, Minoru, Yokohama-shi, Kanagawa 226-0026 (JP)
(74) Representative: Mewburn Ellis LLP
(86) International application number: PCT/JP2022/023907
(87) International publication number: WO 2023/242982

(57) **Abstract**

The purpose of the present invention is to provide a secondary battery having a high energy density and excellent cycle characteristics, in which the secondary battery has a configuration making it possible to be assembled in a short time. The secondary battery of the present invention includes a laminate formed by winding a sheet having a negative electrode and separators disposed on both surfaces of the negative electrode so that the sheet is folded back a plurality of times; and a plurality of positive electrodes that are respectively disposed in each gap formed between the separators facing each other in the laminate.

## Description

### Background

### Field

The present invention relates to a secondary battery and a method for manufacturing the secondary battery.

### Description of Related Art

In recent years, the technology for converting natural energy such as solar light, wind power, or the like into electric energy has attracted attention. Under such a situation, various secondary batteries have been developed as a power storage device which is highly safe and can store a lot of electric energy.

Among those, it is known that lithium secondary batteries in which charging and discharging are performed by transferring lithium ion between a positive electrode and a negative electrode exhibit a high voltage and a high energy density. As typical lithium secondary batteries, a lithium-ion battery (LIB) which has a positive electrode and a negative electrode having an active material capable of retaining lithium element, and is subjected to charging and discharging by transferring or receiving lithium ion between a positive electrode active material and a negative electrode active material is known.

In addition, for the purpose of realizing a high energy density and improving productivity, a lithium-metal battery (LMB) using lithium metal as a negative electrode active material or an anode-free battery (AFB) that uses a negative electrode including a negative electrode collector having no negative electrode active material such as a carbon material or lithium metal, instead of a material into which lithium ion can be inserted, such as a carbon material, as a negative electrode active material, before initial charging has been developed. For example, Patent Document 1 discloses a rechargeable battery using, as a negative electrode, an electrode based on lithium metal.

Moreover, Patent Document 2 discloses a lithium secondary battery including a positive electrode, a negative electrode, a separation membrane interposed therebetween, and an electrolyte, in which in the negative electrode, metal particles are formed on a negative electrode collector and transferred from the positive electrode by charging, and lithium metal is formed on the negative electrode collector in the negative electrode. Patent Document 2 discloses that such a lithium secondary battery can overcome a problem due to the reactivity of the lithium metal and problems that occur during the assembly process, and thus, it is possible to provide a lithium secondary battery having improved performance and service life.

### Citation List

### Patent Documents

Patent Document 1: PCT Japanese Translation Patent Publication No. 2006-500755
Patent Document 2: PCT Japanese Translation Patent Publication No. 2019-505971

### Summary

On the other hand, most of lithium secondary batteries in the related art have been formed of cells in which a positive electrode, a negative electrode, and a separator are laminated in this order. In the case of manufacturing such a lithium secondary battery, it is necessary to repeat a step of taking up a positive electrode, a negative electrode, and a separator one by one with an arm, and laminating the sheets. Therefore, it is necessary for the arm to repeatedly reciprocate between a location where the positive electrode, the negative electrode, and the separator to be laminated are disposed and a location where the positive electrode, the negative electrode, and the separator are laminated, and a long time is required for the manufacturing step.

In addition, there is a lithium secondary battery formed by alternately folding a sheet-like separator or a laminate in which a separator and a negative electrode are formed in a sheet shape in a zigzag shape, and disposing a positive electrode between the separators facing each other in a lamination direction. In such a lithium secondary battery, it is necessary to repeat a step of taking up at least the positive electrode one by one, and laminating them. Therefore, the step of repeatedly reciprocating the arm cannot be avoided, and this also requires a long time for the manufacturing step. On the other hand, in a case where both the positive electrode and the negative electrode have a wound structure, there is a problem in that during the repetition of charging and discharging, the positive electrode and the negative electrode undergo reversible and irreversible volume expansions at the folded-back part, and defects such as cracks or breakage, falling-off of the active material, and the like occur at the folded-back part.

The present invention has been made in consideration of the problems, and has an object to provide a secondary battery which can be assembled in a short time.

A secondary battery according to one embodiment of the present invention is a secondary battery including a laminate formed by winding a sheet having a negative electrode and separators disposed on both surfaces of the negative electrode so that the sheet is folded back a plurality of times, and a plurality of positive electrodes that are respectively disposed in each gap formed between the separators facing each other in the laminate.

Since the secondary battery having the configuration can be manufactured by winding the sheet without laminating the positive electrode one by one, it is possible to assemble the secondary battery in a short time, as compared with the secondary battery having a configuration in the related art, which requires a step of laminating the positive electrode one by one. In addition, since a positive electrode active material is substantially not present on an end surface of the positive electrode, which faces the folded-back part, reversible and irreversible volume expansions due to the repetition of charging and discharging do not occur at the folded-back part of the wound structure. This enables the suppression of a problem in which defects such as cracks or breakage, and the like occur at the folded-back part.

In the secondary battery, it is preferable that the negative electrode has no negative electrode active material. In a battery that does not have such a negative electrode active material, since the negative electrode is substantially formed on a negative electrode collector facing the positive electrode or in a negative electrode buffering function layer facing the positive electrode, there is no negative electrode active material on the negative electrode collector at the folded-back part. Therefore, as compared with a configuration in which the negative electrode active material is provided, the weight of the battery can be reduced and the weight energy density can be further increased.

In the secondary battery, the sheet preferably includes buffering function layers that are respectively disposed between the negative electrode and the separators disposed on both surfaces of the negative electrode.

According to the secondary battery having the configuration, it is possible to effectively suppress the volume expansion of a cell by the configuration in which a buffering function layer is provided. This enables the suppression of the application of stress to the folded-back part of the sheet due to the volume expansion of the cell, and thus, the suppression of, for example, the occurrence of defects due to damage or breakage, and the like at the folded-back part.

In the secondary battery, the buffering function layer preferably has a higher porosity than the separator.

In the secondary battery, the porosity of the buffering function layer is preferably 50% or more and 97% or less.

In the secondary battery, it is preferable that an electrolyte solution in which the separator is immersed is further provided.

In the secondary battery, the negative electrode is preferably formed of at least one or more selected from the group consisting of a metal which does not react with Cu, Ni, Ti, Fe, and Li, an alloy of the metal, and stainless steel.

In the secondary battery, the positive electrode is preferably disposed at a distance of 0.01 mm or more and 5 mm or less from the folded-back part of the sheet in the laminate.

In the secondary battery, the average thickness of the negative electrode is preferably 1 µm or more and 10 µm or less.

In the secondary battery, the buffering function layer preferably has an average thickness of 100 µm or less, a void ratio of 50% or more, and a weight per area of 10 g/m² or less.

A method for manufacturing the secondary battery according to one embodiment of the present invention includes preparing a sheet having a negative electrode having no negative electrode active material and separators disposed on both surfaces of the negative electrode, disposing a plurality of positive electrodes on the sheet along a longitudinal direction of the sheet, and winding the sheet on which the positive electrodes are disposed, to form a state where the positive electrodes are respectively disposed in each gap formed between the separators facing each other.

Since the secondary battery having the configuration can be manufactured by winding a sheet on which a positive electrode is disposed without laminating the positive electrode one by one, it is possible to assemble the secondary battery in a short time, as compared with the secondary battery having a configuration in the related art, which requires a step of laminating the positive electrode one by one. Further, since the manufactured secondary battery adopts a negative electrode having no negative electrode active material, an irreversible volume expansion of a cell including the positive electrode, the negative electrode, and the separator can be suppressed even in a case of repeated uses of the battery. Therefore, it is possible to suppress the application of stress caused by the volume expansion of the cell to the folded-back part of the sheet in the laminate. This enables the suppression of, for example, the occurrence of defects due to damage or breakage, and the like at the folded-back part.

In the method for manufacturing a secondary battery, the sheet preferably includes buffering function layers that are respectively disposed between the negative electrode and the separators disposed on both surfaces of the negative electrode.

According to the present invention, it is possible to provide a secondary battery that can be assembled in a short time.

### Brief Description of Drawings

Fig. 1 is a cross-sectional view of a secondary battery according to Embodiment 1.
Fig. 2 is a view showing a step of manufacturing a secondary battery according to Embodiment 1.
Fig. 3 is a view showing the step of manufacturing a secondary battery according to Embodiment 1.
Fig. 4 is a flowchart showing the step of manufacturing a secondary battery according to Embodiment 1.
Fig. 5 is a cross-sectional view of a secondary battery according to Embodiment 2.
Figs. 6A to 6C are each a view showing a configuration of a buffering function layer.
Fig. 7 is a view showing a step of manufacturing a secondary battery according to Embodiment 2.
Fig. 8 is a cross-sectional view of a secondary battery according to Comparative Example 1.
Fig. 9 is a cross-sectional view of a secondary battery according to Comparative Example 2.
Fig. 10 is a cross-sectional view of a secondary battery according to Comparative Example 3.

### Detailed Description

Hereinafter, embodiments of the present invention will be described in detail with reference to the drawings as necessary. Incidentally, in the drawings, the same elements will be represented by the same reference numerals, and redundant descriptions thereof will be omitted. In addition, unless otherwise specifically described, the positional relationship such as vertical or horizontal one, and the like will be based on the positional relationship shown in the drawings. Further, the dimensional ratios in the drawings are not limited to the depicted ratios.

### [Embodiment 1]

### (Configuration of Secondary Battery)

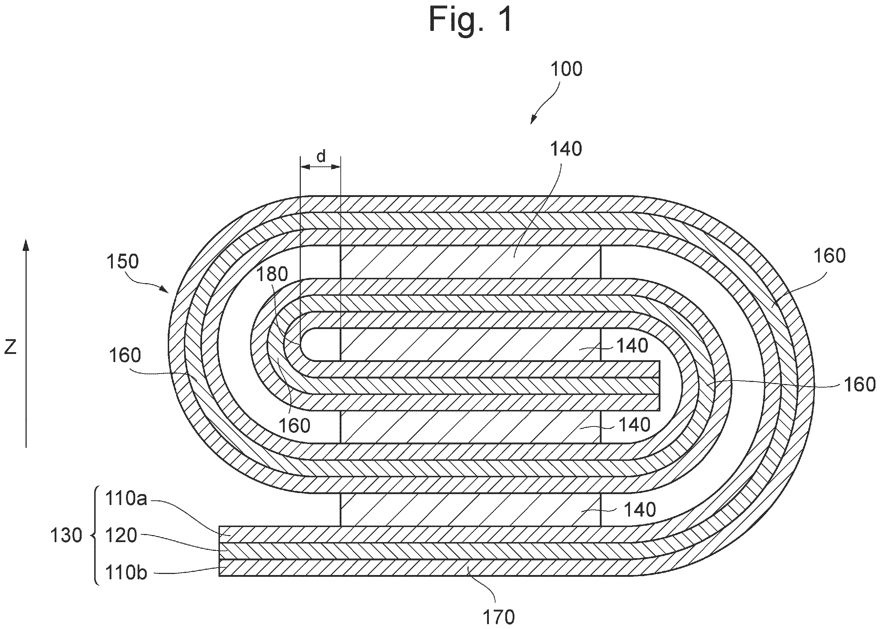

Fig. 1 is a schematic cross-sectional view of an anode-free secondary battery 100 according to Embodiment 1. As shown in Fig. 1, the secondary battery 100 according to Embodiment 1 includes a laminate 150 and a plurality of positive electrodes 140. The laminate 150 is formed by winding a sheet 130 so that the sheet 130 is folded back a plurality of times. The sheet 130 includes a negative electrode 120 having no negative electrode active material, and a first separator 110a and a second separator 110b, disposed on both surfaces of the negative electrode 120. The plurality of positive electrodes 140 are respectively disposed in each gap formed between the separators facing each other in the laminate 150. In the present specification, the first separator 110a and the second separator 110b may be collectively referred to as a separator 110.

### (Laminate)

The laminate 150 is formed by winding the sheet 130 so that the sheet 130 is repeatedly folded back at a folded-back part 160. In a planar part 170 between the folded-back parts 160, the sheet 130 extends in a planar shape without being folded. The planar parts 170 extend substantially parallel to each other.

Furthermore, the number of laminations of the laminate 150 means the number of times the sheet 130 is folded back, and matches the number of folded-back parts 160. For example, as shown in Fig. 1, the laminate 150 formed by folding the sheet 130 back four times has five planar parts 170 and four folded-back parts 160, and the number of laminations is 4. The number of laminations of the laminate 150 also matches the number of the disposed positive electrodes 140. The number of laminations of the secondary battery 100 is the same as the number of laminations of the laminate 150 included in the secondary battery 100.

In the secondary battery 100, the number of laminations thereof is 2 or more. That is, the secondary battery 100 includes the laminate 150 having three planar parts 170 and two folded-back parts 160. The number of laminations of the secondary battery 100 is preferably 3 or more, more preferably 5 or more, and still more preferably 10 or more. In a case where the number of laminations of the secondary battery 100 is within the range, the capacity of the secondary battery 100 is further improved. The upper limit of the number of laminations of the secondary battery 100 is not particularly limited, but the number of laminations may be 50 or less, 40 or less, or 30 or less. In a case where the number of laminations of the secondary battery 100 is within the range, the productivity is further improved.

### (Negative Electrode)

In a secondary battery 100 which is an anode-free lithium secondary battery (hereinafter also referred to as an "anode-free battery" or "AFB") of the present embodiment, the negative electrode 120 includes a negative electrode collector having no negative electrode active material.

The negative electrode active material is a material that causes an electrode reaction, that is, an oxidation reaction and a reduction reaction in the negative electrode 120. Specifically, examples of the negative electrode active material of the present embodiment include lithium metal and a host material for a lithium element (lithium ion or lithium metal). The host material for the lithium element means a material provided to retain the lithium ion or the lithium metal in the negative electrode 120. Examples of such a retention mechanism include intercalation, alloying, occlusion of metal clusters, and the like, and the intercalation is typically used.

In the anode-free battery, the negative electrode 120 has no negative electrode active material before the initial charge of the battery. In the anode-free battery, after the initial charge, lithium metal is deposited on the negative electrode 120 and the deposited lithium metal is electrolytically dissolved to perform charging and discharging. Therefore, the anode-free battery has an advantage that a volume occupied by the negative electrode active material and a mass of the negative electrode active material are reduced, and the volume and the mass of the entire battery are small, leading to a high energy density in principle.

In the present specification, the expression, the negative electrode 120 "having substantially no negative electrode active material" means that the thickness of the negative electrode active material layer in the negative electrode 120 is 25 µm or less at the end of discharge. The content of the negative electrode active material in the negative electrode 120 is preferably 20 µm or less, and more preferably 15 µm or less, and may be 0 µm, with respect to the entire negative electrode 120. Since the negative electrode 120 has substantially no negative electrode active material, not only the weight energy density but also the energy density per volume can be increased.

In addition, in the anode-free battery of the present specification, the expression, "before the initial charge" of the battery, means a state from the time when the battery is assembled to the time when the battery is first charged. In addition, the expression, the battery "being at the end of discharge", means a state where the open circuit voltage of the battery is 2.5 V or more and 3.6 V or less.

In addition, in the anode-free battery of the present embodiment, M_{3.0}/M_{4.2} which is a ratio of a mass M_{3.0} of the lithium metal deposited on the negative electrode 120 in a state where the battery voltage is 3.0 V to a mass M_{4.2} of the lithium metal deposited on the negative electrode 120 in a state where the battery voltage is 4.2 V is preferably 40% or less, more preferably 38% or less, and still more preferably 35% or less. The ratio M_{3.0}/M_{4.2} may be 1.0% or more, 2.0% or more, 3.0% or more, or 4.0% or more.

Moreover, examples of the negative electrode active material include lithium metal and an alloy including the lithium metal, a carbon-based material, metal oxides, a metal to be alloyed with lithium and an alloy including the metal, and the like. The carbon-based material is not particularly limited, and examples thereof include graphene, graphite, hard carbon, carbon nanotubes, and the like. The metal oxide is not particularly limited, and examples thereof include titanium oxide-based compounds, cobalt oxide-based compounds, and the like. Examples of the metal to be alloyed with lithium include silicon, germanium, tin, lead, aluminum, and gallium.

The negative electrode 120 of the anode-free battery is not particularly limited as long as it has no negative electrode active material and can be used as a collector. Examples of the negative electrode 120 include negative electrodes including at least one selected from the group consisting of metals such as Cu, Ni, Ti, Fe, and other metals that do not react with Li, alloys of these metals, and stainless steel (SUS), and preferred examples of the negative electrode include negative electrodes including at least one selected from the group consisting of Cu, Ni, alloys of these metals, and stainless steel (SUS). In a case where such a negative electrode 120 is used, the energy density and the productivity of the battery tend to be further improved. These negative electrode materials can be used alone or in combination of two or more kinds thereof. Furthermore, the expression, "a metal that does not react with Li" in the present specification means a metal which does not form an alloy by reaction with lithium ion or lithium metal under the operation conditions of a lithium secondary battery.

An average thickness of the negative electrode 120 of the anode-free battery is not particularly limited, and is, for example, 1.0 µm or more and 30 µm or less. From the viewpoint of reducing the volume occupied by the negative electrode 120 in the anode-free battery and improving the energy density, the average thickness of the negative electrode 120 is preferably 2.0 µm or more and 20 µm or less, more preferably 2.0 µm or more and 18 µm or less, and still more preferably 3.0 µm or more and 15 µm or less.

The negative electrode 120 of the anode-free battery of the present embodiment has a configuration in which a negative electrode active material coating layer is not provided. In a case of using the negative electrode active material coating layer is provided, the negative electrode 120 may be peeled off or fall off at the folded-back part for winding, and thus, there is a possibility that a defect may occur inside the battery.

At least a part of a surface of the negative electrode 120 of the anode-free battery, facing the positive electrode 140, may be coated with a compound (hereinafter also referred to as a "negative electrode coating agent") including an aromatic ring to which two or more elements selected from the group consisting of N, S, and O are each independently bonded. It is presumed that the negative electrode coating agent can be retained on the negative electrode 120 by configuring at least one element selected from the group consisting of N, S, and O to be coordinately bonded to a metal atom constituting the negative electrode 120. In addition, in a case where the negative electrode 120 coated with the negative electrode coating agent is used, it can be expected that a non-uniform deposition reaction of the lithium metal is suppressed on a surface of the negative electrode 120 and the growth of lithium metal deposited on the negative electrode 120 into a dendrite shape is suppressed.

The negative electrode coating agent is not particularly limited as long as it is a compound including an aromatic ring in which two or more elements selected from the group consisting of N, S, and O are each independently bonded, that is, a compound having a structure in which two or more of N, S, and O are independently bonded to an aromatic ring. Examples of the aromatic ring include aromatic hydrocarbons such as benzene, naphthalene, azulene, anthracene, pyrene, and the like, and heteroaromatic compounds such as furan, thiophene, pyrrole, imidazole, pyrazole, pyridine, pyridazine, pyrimidine, pyrazine, and the like. Among these, the aromatic hydrocarbons are preferable, benzene or naphthalene is more preferable, and benzene is still more preferable.

In addition, it is preferable that one or more nitrogen atoms are bonded to the aromatic ring in the negative electrode coating agent. Furthermore, it is more preferable that the negative electrode coating agent is a compound having a structure in which a nitrogen atom is bonded to the aromatic ring, and in addition to the nitrogen atom, one or more elements selected from the group consisting of N, S, and O are each independently bonded to the aromatic ring. In a case where the compound in which a nitrogen atom is bonded to the aromatic ring is used as the negative electrode coating agent in this manner, the cycle characteristics of the battery tend to be further improved.

Specific examples of the negative electrode coating agent include at least one selected from the group consisting of benzotriazole, benzimidazole, benzimidazolethiol, benzoxazole, benzothiazolethiol, benzothiazole, mercaptobenzothiazole, and derivatives thereof. Among these, as the negative electrode coating agent, at least one selected from the group consisting of benzotriazole, benzimidazole, benzoxazole, mercaptobenzothiazole, and derivatives thereof is preferable. According to such an aspect, electrical connection between the negative electrode and the lithium ion with which the negative electrode coating agent is coordinated is further improved, and thus, the cycle characteristics of the battery tend to be further improved.

At least a part of a surface of the negative electrode 120, which faces the positive electrode 140, may be coated with the negative electrode coating agent. That is, in the surface of the negative electrode 120, 10% or more of the surface area, in terms of the area ratio, only needs to have the negative electrode coating agent, and preferably 20% or more, more preferably 40% or more, still more preferably 60% or more, and even still more preferably 80% or more of the surface area may have the negative electrode coating agent.

### (Separator)

A separator 110 of the anode-free battery is not particularly limited as long as it has a function of physically and/or electrically separating the positive electrode 140 and the negative electrode 120 from each other, and a function of securing the ion conductivity of lithium ion. Examples of such a separator 110 include a porous member having insulating properties, a polymer electrolyte, a gel electrolyte, and an inorganic solid electrolyte, and typically include at least one selected from the group consisting of the porous member having insulating properties, the polymer electrolyte, and the gel electrolyte. In addition, as the separator 110, the member may be used alone or the members may be used in combination of two or more kinds thereof.

As the separator 110 of the anode-free battery, the porous insulating member, the polymer electrolyte, or the gel electrolyte can be used alone or in combination of two or more kinds thereof. Furthermore, in a case where the porous insulating member is used alone as the separator, the secondary battery 100 needs to further include an electrolyte solution.

In a case where the separator 110 includes the porous insulating member, the member exhibits ion conductivity by filling pores of the member with a material having ion conductivity. Therefore, in the present embodiment, for example, the electrolyte solution of the present embodiment, the gel electrolyte including the electrolyte solution of the present embodiment, and the like are filled.

A material constituting the porous insulating member is not particularly limited, and examples thereof include an insulating polymer material, and specifically include polyethylene (PE) and polypropylene (PP). That is, the separator may be a porous polyethylene (PE) film, a porous polypropylene (PP) film, or a laminated structure thereof.

The separator 110 may be covered (coated) with a separator coating layer. The coating layer may cover both surfaces of the separator or may cover only one of the surfaces. From the viewpoint of improving the cycle characteristics of the secondary battery 100 in the present embodiment, it is preferable that both surfaces of the separator 110 are covered. Furthermore, the separator coating layer in the present embodiment is a film-like coating layer that is uniformly continuous, and is, for example, a film-like coating layer that is uniformly continuous over an area of 50% or more of a surface of the separator 110.

The separator coating layer is not particularly limited, and for example, a binder such as polyvinylidene fluoride (PVDF), a composite material (SBR-CMC) of styrene butadiene rubber and carboxymethyl cellulose, or a polyacrylic acid (PAA) is preferable. In the separator coating layer, inorganic particles such as silica, alumina, titania, zirconia, magnesium hydroxide, and the like may be added to the binder.

An average thickness of the separator, including the separator coating layer, is not particularly limited, and is, for example, 3.0 µm or more and 40 µm or less. In the secondary battery 100, from the viewpoint of securely separating the positive electrode 140 and the negative electrode 120 from each other and reducing a volume occupied by the separator 110 in the battery, the average thickness of the separator is preferably 5.0 µm or more and 30 µm or less, more preferably 7.0 µm or more and 10 µm or less, and still more preferably 10 µm or more and 20 µm or less.

### (Positive Electrode)

As shown in Fig. 1, in the secondary battery 100, the positive electrodes 140 are respectively disposed in each gap formed by winding the sheet 130 so that the sheet 130 is folded back. More specifically, the positive electrodes 140 are respectively disposed between the planar parts 170 adjacent to each other in the lamination direction Z. As shown in Fig. 1, the positive electrode 140 faces the first separator 110a or the second separator 110b.

Since the positive electrodes 140 are respectively disposed between the planar parts 170 adjacent to each other as described above, the positive electrode 140 faces the negative electrode 120 through the first separator 110a or the second separator 110b on both surfaces thereof.

As shown in Fig. 1, the positive electrode 140 is disposed to be spaced from the winding end part 180, which is an end part of the folded-back part 160 within the laminate 150, in a range of 0.01 mm or more and 5.00 mm or less. That is, the distance d between the positive electrode 140 and the winding end part 180 is preferably 0.01 mm or more and 5.00 mm or less. Furthermore, the winding end part 180 is a point of the folded-back part 160, which is closest to the positive electrode 140 on the cut surface of the secondary battery 100. The distance d between the positive electrode 140 and the winding end part 180 is a distance between the winding end part 180 and the end surface of the positive electrode 140 at a position facing the winding end part 180. In a case where the distance d is 0.01 mm or more, the time required for positioning the positive electrode 140 is shortened, and thus, the productivity of the secondary battery 100 is further improved. In addition, since the distance d is 5.00 mm or less, the area of the facing surfaces of the positive electrode 140 and the negative electrode 120 is further increased, and thus, the energy density and the capacity of the secondary battery 100 are further improved. From the same viewpoint, the distance d is more preferably 0.05 mm or more and 4.00 mm or less, and still more preferably 0.10 mm or more and 3.00 mm or less.

Furthermore, the distance d between the positive electrode 140 and the winding end part 180 may be measured as follows. First, the secondary battery 100 is cut in a plane parallel to the lamination direction Z and perpendicular to at least one folded-back part 160. The obtained cut surface is observed by a method such as visual observation, an optical microscope, or an electron microscope, and the distance d between the positive electrode 140 and the winding end part 180 is measured for at least two or more positive electrodes 140. By determining an arithmetic mean of the measurement results, the distance d between the positive electrode 140 and the winding end part 180 can be determined.

The positive electrode 140 of the anode-free battery is not particularly limited as long as it is a positive electrode generally used for a lithium secondary battery, and known materials can be appropriately selected depending on the use of the lithium secondary battery. From the viewpoint of improving the stability and the output voltage of the battery, it is preferable that the positive electrode 140 has a positive electrode active material. In a case where the positive electrode 140 has a positive electrode active material, typically, lithium ion is filled into and extracted from the positive electrode active material by charging and discharging of the battery.

Furthermore, in the present specification, the "positive electrode active material" is a substance that causes an electrode reaction, that is, an oxidation reaction and a reduction reaction in the positive electrode 140, and specific examples of the positive electrode active material include a host material of lithium element (typically lithium ion).

Such a positive electrode active material is not particularly limited, and examples thereof include metal oxides and metal phosphates. The metal oxides are not particularly limited, and examples thereof include cobalt oxide-based compounds, manganese oxide-based compounds, nickel oxide-based compounds, and the like. The metal phosphates are not particularly limited, and examples thereof include iron phosphate-based compounds and cobalt phosphate-based compounds. Typical examples of the positive electrode active material include LiCoO₂, LiNiₓCo_{y}Mn_{z}O (x + y + z = 1), LiNiₓCo_{y}Al_{z}O (x + y + z = 1), LiNiₓMn_{y}O (x + y = 1), LiNiO₂, LiMn₂O₄, LiFePO, LiCoPO, LiFeOF, LiNiOF, and LiTiS₂. Such positive electrode active materials can be used alone or in combination of two or more kinds thereof.

The positive electrode 140 may include components other than the positive electrode active material. Such a component is not particularly limited, and examples thereof include a sacrificial positive electrode material, a conductive aid, a binder, a gel electrolyte, and a polymer electrolyte.

Here, the sacrificial positive electrode material is a lithium-containing compound that causes an oxidation reaction in a charging-and-discharging potential range of the positive electrode active material and does not substantially cause a reduction reaction, and in particular, the positive electrode 140 may include the sacrificial positive electrode in an anode-free battery.

In particular, the positive electrode 140 may include a gel electrolyte. According to such an aspect, adhesion force between the positive electrode 140 and the positive electrode collector is improved by a function of the gel electrolyte, it is possible to attach a thinner positive electrode collector, and thus, the energy density of the battery can be further improved. In a case of attaching the positive electrode collector onto a surface of the positive electrode, a positive electrode collector formed on a release paper may be used.

The conductive aid in the positive electrode 140 is not particularly limited, and examples thereof include carbon black, single-wall carbon nanotubes (SWCNT), multi-wall carbon nanotubes (MWCNT), carbon nanofibers (CF), and the like. In addition, the binder is not particularly limited, and examples thereof include polyvinylidene fluoride, polytetrafluoroethylene, styrene butadiene rubber, acrylic resins, polyimide resins, and the like.

The gel electrolyte is not particularly limited, and examples thereof include a polymer, an organic solvent, and a lithium salt. The polymer in the gel electrolyte is not particularly limited, and examples thereof include a copolymer of polyethylene and/or polyethylene oxide, polyvinylidene fluoride, a copolymer of polyvinylidene fluoride and hexafluoropropylene, and the like. In addition, the polymer electrolyte is not particularly limited, and examples thereof include a solid polymer electrolyte mainly including a polymer and an electrolyte and a semi-solid polymer electrolyte mainly including a polymer, an electrolyte, and a plasticizer.

An average thickness of the positive electrode 140 is preferably 20 µm or more and 100 µm or less, more preferably 30 µm or more and 80 µm or less, and still more preferably 40 µm or more and 70 µm or less. It should be noted that the average thickness of the positive electrode 140 can be appropriately adjusted according to a desired capacity of the battery.

A positive electrode collector is disposed on one side of the positive electrode 140 of the anode-free battery. The positive electrode collector is not particularly limited as long as it is a conductor that is not reactive with lithium ion in the battery. Examples of such a positive electrode collector include aluminum. Incidentally, the positive electrode collector may not be provided, and in this case, the positive electrode 140 itself acts as a collector. Furthermore, the positive electrode collector functions to transfer electrons to and from the positive electrode 140 (in particular, the positive electrode active material), and is in physical and/or electrical contact with the positive electrode.

In the anode-free battery, an average thickness of the positive electrode collector is preferably 1.0 µm or more and 15 µm or less, more preferably 2.0 µm or more and 10 µm or less, and still more preferably 3.0 µm or more and 6.0 µm or less. According to such an aspect, the volume occupied by the positive electrode collector in the anode-free battery is reduced, and therefore, the energy density of the anode-free battery is further improved.

The content of the positive electrode active material in the positive electrode 140 may be, for example, 50% by mass or more and 100% by mass or less with respect to the total amount of the positive electrode 140. The content of the conductive aid may be, for example, 0.5% by mass or more and 30% by mass or less with respect to the total amount of the positive electrode 140. The content of the binder may be, for example, 0.5% by mass or more and 30% by mass or less with respect to the total amount of the positive electrode 140. The total content of the solid polymer electrolyte and the inorganic solid electrolyte may be, for example, 0.5% by mass or more and 30% by mass or less with respect to the total amount of the positive electrode 140.

### (Electrolyte Solution)

It is preferable that the secondary battery 100 further includes an electrolyte solution.

The electrolyte solution is a liquid including a solvent and an electrolyte, and has ion conductivity. The electrolyte solution may be rephrased as a liquid electrolyte and act as a conductive path for lithium ion. Therefore, in a case where the secondary battery 100 has the electrolyte solution, the internal resistance is further reduced, and the energy density, the capacity, and the cycle characteristics tend to be further improved.

The electrolyte solution may be infiltrated into the separator 110, and the electrolyte solution may be encapsulated together with the laminate of the negative electrode 120, the separator 110, the positive electrode 140, and the positive electrode collector to obtain a finished product of the secondary battery 100.

As the electrolyte included in the electrolyte solution, an electrolyte that can be included in the polymer electrolyte and the gel electrolyte, in particular, one or two or more of the lithium salts can be used alone or in combination of two or more kinds thereof. The preferable lithium salts are the same as those in the polymer electrolyte and the gel electrolyte.

Examples of the solvent included in the electrolyte solution include a non-aqueous solvent having a fluorine atom (hereinafter referred to as a "fluorinated solvent") and a non-aqueous solvent having no fluorine atom (hereinafter referred to as a "non-fluorine solvent").

The fluorinated solvent is not particularly limited, and examples thereof include 1,1,2,2-tetrafluoroethyl-2,2,3,3-tetrafluoropropyl ether, 1,1,2,2-tetrafluoroethyl-2,2,2-trifluoroethyl ether, and 1H,1H,5H-octafluoropentyl-1,1,2,2-tetrafluoroethyl ether.

The non-fluorine solvent is not particularly limited, and examples thereof include triethylene glycol dimethyl ether, tetraethylene glycol dimethyl ether, 1,2-dimethoxyethane, dimethoxyethane, dimethoxypropane, dimethoxybutane, diethylene glycol dimethyl ether, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, triethyl phosphate, and 12-crown-4.

One or two or more of the fluorinated solvents and/or the non-fluorine solvents can be freely used alone or in combination of two or more kinds thereof at any proportion. The contents of the fluorinated solvent and the non-fluorine solvent are not particularly limited, the proportion of the fluorinated solvent with respect to the total amount of the solvent may be 0% to 100% by volume, and the proportion of the non-fluorine solvent with respect to the total amount of the solvent may be 0% to 100% by volume.

### (Positive Electrode Terminal and Negative Electrode Terminal)

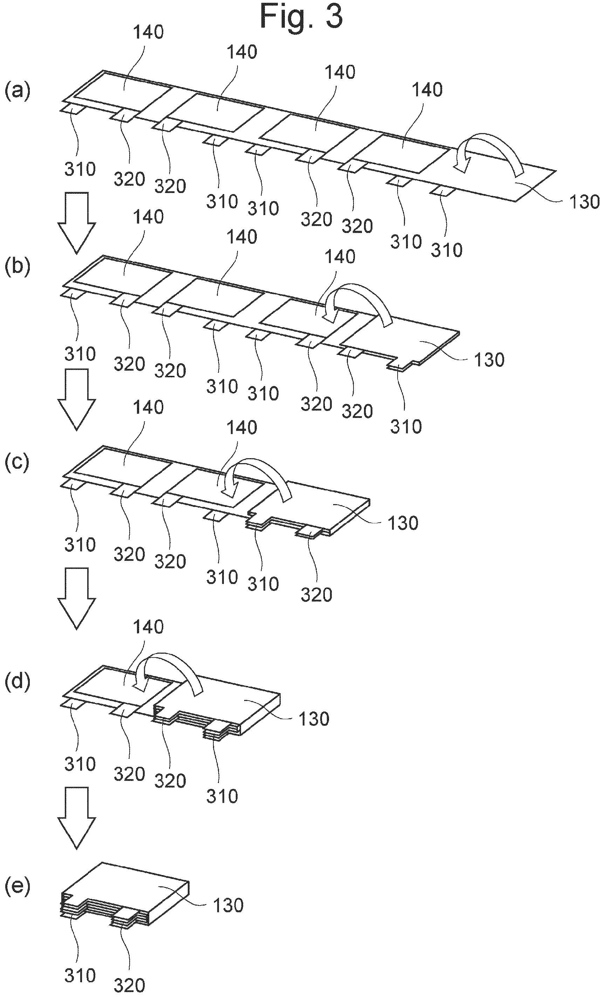

As shown in (e) of Fig. 3 showing the secondary battery 100 in a wound state, the secondary battery 100 includes at least one negative electrode terminal 310 on the planar part 170 of the laminate 150. In addition, the secondary battery 100 includes a positive electrode terminal 320 in each of the positive electrodes 140. The negative electrode terminal 310 and the positive electrode terminal 320 are each connected to an external circuit. The materials of the negative electrode terminal 310 and the positive electrode terminal 320 are not particularly limited as long as the materials are conductive, and examples thereof include Al, Ni, and the like.

### (Use of Secondary Battery)

The secondary battery 100 is charged and discharged by connecting the negative electrode terminal 310 to one end of the external circuit and connecting the positive electrode terminal 320 to the other end of the external circuit. Furthermore, in a case where a plurality of negative electrode terminals 310 are present, all the negative electrode terminals 310 are connected to the external circuit to have the same potential. In addition, similarly, the positive electrode terminal 320 is also connected to the external circuit so that all the positive electrode terminals 320 have the same potential.

The secondary battery 100 is charged by applying voltage between the positive electrode terminal 320 and the negative electrode terminal 310 so that current flows from the negative electrode terminal 310 to the positive electrode terminal 320 via the external circuit. By charging the secondary battery 100, deposition of the carrier metal occurs at an interface between the negative electrode 120 and the first separator 110a and an interface between the negative electrode 120 and the second separator 110b. The carrier metal to be deposited is typically lithium metal.

In the secondary battery 100, a solid electrolyte interfacial layer (SEI layer) may be formed at an interface between the negative electrode 120 and the first separator 110a and/or an interface between the negative electrode 120 and the second separator 110b by initial charging. The SEI layer to be formed is not particularly limited, but may include, for example, an inorganic material of a carrier metal and an organic material of a carrier metal. Typically, the SEI layer may include an inorganic compound including lithium, an organic compound including lithium, and the like. The typical average thickness of the SEI layer is 1 nm or more and 10 µm or less.

In a case where the SEI layer is formed in the secondary battery 100, the carrier metal deposited during the charging of the secondary battery 100 may be deposited at an interface between the negative electrode 120 and the SEI layer, may be deposited at an interface between the SEI layer and the first separator 110a, or may be deposited at an interface between the SEI layer and the second separator 110b.

In a case where the positive electrode terminal 320 and the negative electrode terminal 310 are connected to the secondary battery 100 after charging, the secondary battery 100 is discharged. The deposition of the carrier metal that has occurred at least any one of the interface between the negative electrode 120 and the SEI layer, the interface between the SEI layer and the first separator 110a, and the interface between the SEI layer and the second separator 110b is dissolved.

### (Method for Manufacturing Secondary Battery)

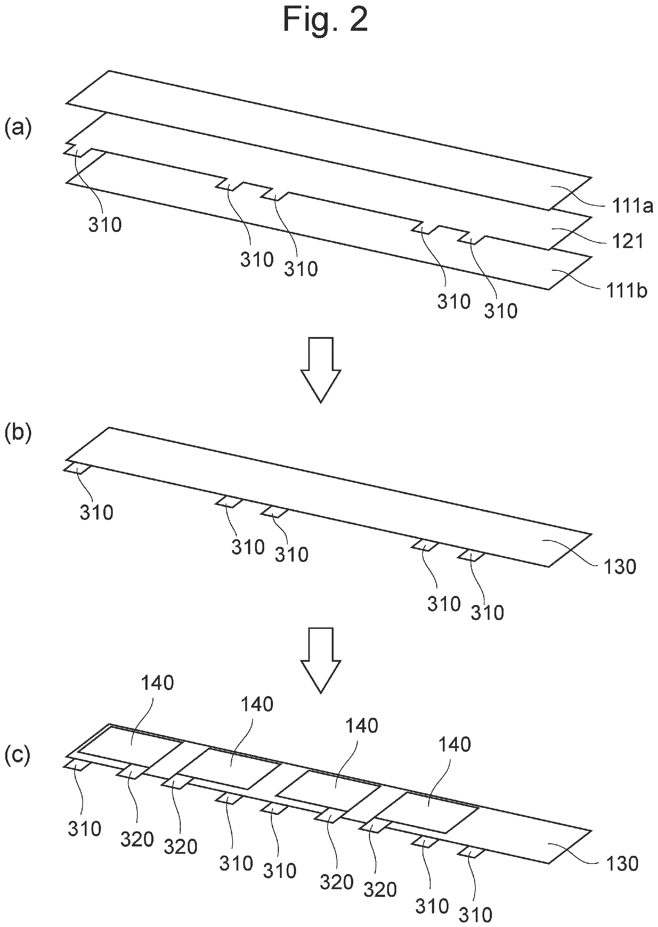

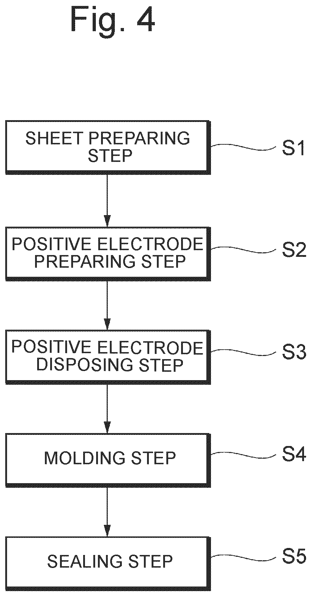

Figs. 2 and 3 are each a view showing a step of manufacturing the secondary battery 100 of the present embodiment. Fig. 4 is a flowchart showing the step of manufacturing the secondary battery 100 of the present embodiment. Hereinafter, a method for manufacturing the secondary battery 100 will be specifically described with reference to these drawings.

### (Sheet Preparing Step)

First, a sheet 130 having a negative electrode 120 having no negative electrode active material, and separators 110 that are disposed on both surfaces of the negative electrode 120 is prepared (S1 in Fig. 4). The sheet preparing step is not particularly limited as long as it is a step of disposing the separators 110 on both surfaces of the negative electrode 120, and for example, a roll-to-roll method can be used.

The roll-to-roll method is performed, for example, as follows. That is, a roll in which a sheet (hereinafter referred to as a "negative electrode sheet 121") including a material constituting the negative electrode 120 is wound, a roll in which a sheet (hereinafter referred to as a "first separator sheet 111a") including a material constituting the first separator 110a is wound, and a roll in which a sheet (hereinafter referred to as a "second separator sheet 111b") including a material constituting the second separator 110b is wound are prepared. (a) of Fig. 2 shows the negative electrode sheet 121, the first separator sheet 111a, and the second separator sheet 111b. These rolls are installed in a predetermined device, and while returning each roll to a sheet shape, the negative electrode sheet 121 is sandwiched between the first separator sheet 111a and the second separator sheet 111b, and pressed in the thickness direction of the sheet to form a sheet 130 in which the first separator sheet and the second separator sheet are disposed on both surfaces of the negative electrode sheet. (b) of Fig. 2 shows the sheet 130 made in this manner. The obtained sheet 130 can be wound in a roll shape and used in the next step.

In a case where the roll-to-roll method is used in the sheet preparing step, the sheet 130 in which the first separator sheet and the second separator sheet are disposed on both surfaces of the negative electrode sheet while the negative electrode sheet is being pulled in the plane direction can be formed. Therefore, it is less likely to cause the occurrence of wrinkles in the negative electrode sheet. In addition, since the obtained sheet 130 is wound in a roll shape, it is easy to be used in subsequent steps and the productivity is further excellent.

Furthermore, the negative electrode sheet may have the same thickness as the negative electrode 120 or may be thicker than the negative electrode 120. In a case where the negative electrode sheet is thicker than the negative electrode 120, the negative electrode sheet may be thinned by rolling the negative electrode sheet before the step of sandwiching the negative electrode sheet between the first separator sheet and the second separator sheet.

The sheet preparing step may include a washing step and a drying step before and/or after forming the sheet 130 including the negative electrode 120 and the separators 110 disposed on both surfaces of the negative electrode 120. Examples of the washing step include a step of washing the negative electrode sheet with a solvent including sulfamic acid and then ultrasonically washing the negative electrode sheet with ethanol.

### (Positive Electrode Preparing Step)

Next, the positive electrode 140 is prepared (S2 in Fig. 4). A method for manufacturing the positive electrode 140 is not particularly limited as long as it is a method by which the above-described positive electrode 140 can be obtained, but the positive electrode 140 may be obtained, for example, by applying a positive electrode mixture obtained by mixing a positive electrode active material, a known conductive aid, and a known binder onto, for example, one surface of a metal foil (for example, an Al foil) having a thickness of 5 µm to 1 mm, and performing press-molding. Alternatively, a commercially available positive electrode for a secondary battery may be used.

### (Positive Electrode Disposing Step)

Next, the positive electrode 140 is disposed on the sheet 130 at a predetermined interval (S3 in Fig. 4). As shown in (c) of Fig. 2, the positive electrode 140 is not disposed at the right end part of the drawing, which is the side where the winding is started. Since the laminate 150 is formed by winding the sheet 130, the interval disposed between the positive electrodes 140 is widened as the distance from the side on which the winding is started is increased.

### (Molding Step)

Next, the sheet 130 on which the positive electrode 140 is disposed is wound from the end part in order as shown in Fig. 3 (S4 in Fig. 4). At this time, the sheet 130 is wound by folding back so that the approximate midpoint between the positive electrodes 140 disposed to be adjacent to each other is at the center of the fold. As a result, a laminate 150 formed by winding the sheet 130 so that the sheet 130 is folded back a plurality of times, and the positive electrodes 140 are respectively disposed in each gap formed between the separators 110 facing each other in the laminate 150, thereby obtaining a molded body as shown in Fig. 1.

As described above, in the molding step, the winding is only performed from a state where the negative electrode 120, the separator 110, and the positive electrode 140 necessary for forming a molded body are prepared, and it is thus not necessary to perform a work of placing the positive electrode 140 or the negative electrode 120 in the middle of the process using an arm or the like. Therefore, the time required to assemble the molded body can be shortened, as compared with a manufacturing method in the related art, in which a work of placing the positive electrode 140, the negative electrode 120, or the like is required using an arm or the like.

### (Sealing Step)

Next, the molded body as shown in Fig. 1 is sealed in a sealing container to obtain a sealed body, which is used as the secondary battery 100 (S5 in Fig. 4). In the sealing step, the electrolyte solution may be sealed in a sealing container. As described above, by sealing the electrolyte solution, the internal resistance of the secondary battery 100 is further reduced, and thus, the energy density, the capacity, and the cycle characteristics of the secondary battery 100 are further improved.

The sealing container in the sealing step is not particularly limited, and examples thereof include a laminated film.

### [Embodiment 2]

The secondary battery 101 of Embodiment 2 is different from the secondary battery 100 of Embodiment 1 in that the sheet 131 corresponding to the sheet 130 has the buffering function layer 190. That is, in the laminate 151 corresponding to the laminate 150 of Embodiment 1, the buffering function layer 190 is disposed between the separator 110 and the negative electrode 120. Hereinafter, the present embodiment will be described mainly with respect to the differences from Embodiment 1, and the description of the parts common to Embodiment 1 will be omitted.

### (Configuration of Secondary Battery)

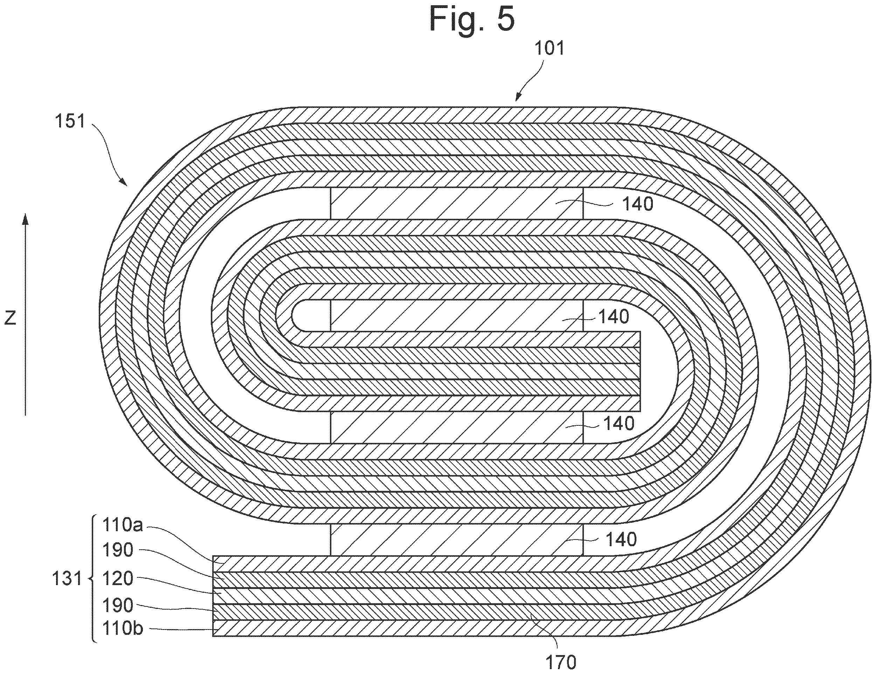

Fig. 5 is a schematic cross-sectional view of an anode-free secondary battery 101 according to Embodiment 2. As shown in Fig. 5, the secondary battery 101 includes a laminate 151 and a plurality of positive electrodes 140. The laminate 151 is formed by winding the sheet 131 so that the sheet 131 is folded back a plurality of times. The sheet 131 includes the negative electrode 120 having no negative electrode active material, the first separator 110a, the second separator 110b, and a buffering function layer 190. As shown in Fig. 5, the buffering function layer 190 is disposed between the negative electrode 120, and the first separator 110a and the second separator 110b.

### (Buffering Function Layer)

The buffering function layer 190 of Embodiment 2 has porous ion conductivity and electric conductivity. In the present embodiment, the porous shape includes a fibrous shape. Here, since the buffering function layer 190 has a porous shape, it has a solid portion having ion conductivity and electrical conductivity, and a pore portion (having the same definition as the "gap portion"; hereinafter, the same applies in the present specification) formed by a gap between the solid portions. Furthermore, in the present specification, the term "solid portion" in the buffering function layer in the buffer function layer 190 includes a gel-like portion.

Since the buffering function layer 190 is configured as described above, in a case where the secondary battery is charged, electrons from the negative electrode and lithium ion from the separator and/or the electrolyte solution are supplied to the solid portion. As a result, the electrons and the lithium ion supplied as described above react with each other on a surface of the solid portion, and lithium metal is deposited on the pore portion (the surface of the solid portion). Therefore, the buffering function layer 190 exhibits an effect of suppressing the volume expansion of the battery caused by the deposition of the lithium metal in a case where the battery is charged. That is, the secondary battery 101 can further suppress the volume expansion or the volume change caused by charging and discharging, as compared with the secondary battery 100 of Embodiment 1.

The present inventors have found that in the secondary battery of the present embodiment, even in a case where the buffering function layer is introduced, the cycle characteristics of the battery are not deteriorated, and the cycle characteristics can rather be improved. The present inventors speculate that the reason for this is that due to the introduction of the buffering function layer, the surface area of a field where the lithium metal can be deposited increases, the reaction rate of the lithium metal deposition reaction is slowly controlled, and the formation of lithium metal grown in a dendrite shape is more reliably suppressed.

Furthermore, in the present embodiment, the expression "the lithium metal is deposited on the negative electrode" means that the lithium metal is deposited on at least one of the surface of the negative electrode and the surface of the solid portion of the buffering function layer unless otherwise specified. Therefore, in the lithium secondary battery of the present embodiment, the lithium metal may be deposited on a surface of the negative electrode (an interface between the negative electrode and the buffering function layer) or on the inside of the buffering function layer (a surface of the solid portion of the buffering function layer).

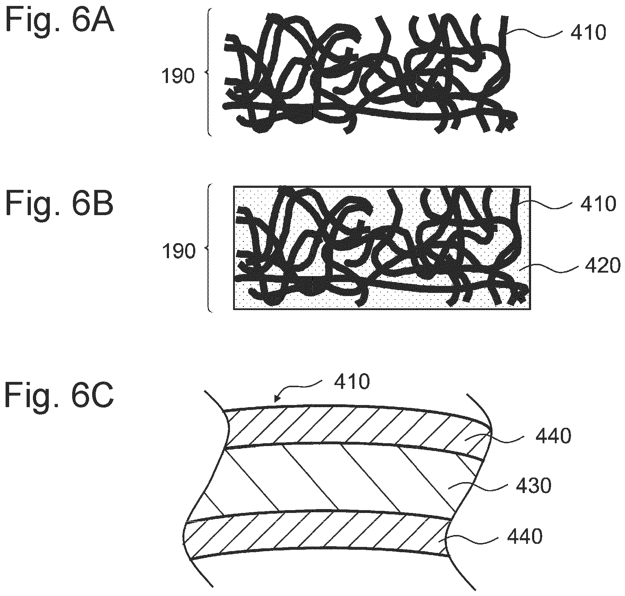

As one embodiment of the buffering function layer 190, a fibrous buffering function layer may be mentioned. Fig. 6A is a schematic cross-sectional view of a fibrous buffering function layer. The buffering function layer 190 shown in Fig. 6A includes an ionically and electrically conductive fiber 410 which is a fiber having ion conductivity and electrical conductivity. In other words, in the present embodiment, the term "the buffering function layer is fibrous" means that the buffering function layer includes a fiber or is formed of a fiber so that the layer has solid portions and pore portions including the spaces between the solid portions.

In a case where the lithium secondary battery having the buffering function layer 190 shown in Fig. 6A is charged, lithium metal is deposited on a surface of the solid portion of the buffering function layer, that is, on a surface of the ionically and electrically conductive fiber 410. Thus, according to such an aspect, as shown by the schematic cross-sectional view in Fig. 6B, lithium metal 420 is deposited on the surface of the ionically and electrically conductive fiber 410, which is a solid portion of the buffering function layer, to fill the pore portion of the buffering function layer with the lithium metal. In other words, the lithium metal 420 is deposited on the inside of the buffering function layer 190.

Fig. 6C is a schematic cross-sectional view showing one embodiment of the ionically and electrically conductive fiber 410. As shown in Fig. 6C, in the present embodiment, the ionically and electrically conductive fiber 410 has a fibrous, ionically conductive layer 430 and an electrically conductive layer 440 which covers the surface of the ionically conductive layer 430. The ionically conductive layer 430 may have, for example, the constitution as described above as the ionically conductive layer, and the electrically conductive layer 440 may have, for example, the constitution as described above as the electrically conductive layer.

The fibrous, ionically conductive layer 430 has an average fiber diameter of preferably 30 nm or more and 5,000 nm or less, more preferably 50 nm or more and 2,000 nm or less, still more preferably 70 nm or more and 1,000 nm or less, and even still more preferably 80 nm or more and 500 nm or less. By setting the average fiber diameter of the ionically conductive layer to be within the range, the surface area of a reaction site on which the lithium metal can be deposited is in a more appropriate range, and therefore, the cycle characteristics tend to be further improved.

The average thickness of the electrically conductive layer 440 is preferably 1 nm or more and 300 nm or less, more preferably 5 nm or more and 200 nm or less, and still more preferably 10 nm or more and 150 nm or less. The electrically conductive layer having an average thickness within the range can more appropriately keep the electrical conductivity of the ionically and electrically conductive fiber 410, and therefore, the cycle characteristics tend to be further improved.

The buffering function layer 190 of the present embodiment is not limited to the configuration as described above, and is not particularly limited as long as it is porous (including a fibrous shape) and has a porosity of 50% or more and 97% or less. Non-limiting examples of the buffering function layer 190 include a nonwoven fabric including fibers and a woven fabric. The material of the buffering function layer 190 may be any of inorganic, organic, or metallic, or a combination thereof. In addition, a material that has been subjected to a plating treatment for imparting conductivity to a skeleton having no electron conductivity may also be used.

The porosity (also referred to as a void ratio) of the buffering function layer 190 is preferably 50% or more, more preferably 60% or more, and still more preferably 70% or more, in terms of % by volume. By setting the porosity of the buffering function layer to be within the range, the surface area of a reaction site on which the lithium metal can be deposited is further increased, and therefore, the cycle characteristics tend to be further improved. In addition, according to such an aspect, there is a tendency that an effect of more effectively and reliably suppressing the cell volume expansion is exhibited. The porosity of the buffering function layer may be 97% or less, 95% or less, or 90% or less in terms of % by volume.

The average thickness of the buffering function layer 190 is preferably 100 µm or less, more preferably 50 µm or less, and still more preferably 30 µm or less. By setting the average thickness of the buffering function layer to be within the range, an occupation volume of the buffering function layer 190 in the secondary battery 101 is reduced, and therefore, the energy density of the battery is further improved. In addition, the average thickness of the buffering function layer is preferably 1 µm or more, more preferably 4 µm or more, and still more preferably 7 µm or more. By setting the average thickness of the buffering function layer to be within the range, the surface area of a reaction site on which lithium metal can be deposited is further increased, and therefore, the cycle characteristics tend to be further improved. In addition, according to such an aspect, there is a tendency that an effect of more effectively and reliably suppressing the cell volume expansion is exhibited.

The fiber diameter of the fibrous, ionically conductive layer, the thickness of the electrically conductive layer, the porosity of the buffering function layer, and the thickness of the buffering function layer can be measured by known measurement methods. For example, the thickness of the buffering function layer can be measured by etching the surface of the buffering function layer by focused ion beams (FIB) to expose a cut surface thereof and observing the thickness of the buffering function layer at the exposed section with an electron microscope.

The fiber diameter of the fibrous, ionically conductive layer, the thickness of the electrically conductive layer, and the porosity of the buffering function layer can be measured by observing the surface of the buffering function layer with an electron microscope. The porosity of the buffering function layer may be calculated by subjecting the observed image of a surface of the buffering function layer to binary analysis with an image analysis software and finding an occupation proportion of the buffering function layer in the total area of the image.

Each of the measurement values is calculated by determining an average of the values measured 3 times or more, and preferably 10 times or more.

In a case where the buffering function layer 190 includes a metal that can react with lithium, a total capacity of the negative electrode 120 and the buffering function layer 190 is sufficiently small with respect to the capacity of the positive electrode 140, and is, for example, 20% or less, 15% or less, 10% or less, or 5% or less. Furthermore, the capacity of each of the positive electrode 140, the negative electrode 120, and the buffering function layer 190 can be measured by a method known in the related art.

The weight per surface of the buffering function layer 190 is preferably 3 g/m² or more and 20 g/m² or less, more preferably 4 g/m² or more and 15 g/m² or less, and still more preferably 5 g/m² or more and 10 g/m² or less.

### (Method for Manufacturing Secondary Battery)

The secondary battery 101 of the present embodiment is different from that of Embodiment 1 in that the sheet 130 is replaced with the sheet 131 as described above. Here, a difference from Embodiment 1 in the sheet preparing step of preparing the sheet 131 in the present embodiment will be described. The manufacturing method other than the sheet preparing step in the present embodiment is the same as that of Embodiment 1, and a description thereof will be omitted.

### (Sheet Preparing Step)

In the sheet preparing step of the present embodiment, the sheet 131 including the negative electrode 120 having no negative electrode active material, the buffering function layer 190, and the separator 110 is prepared. The sheet preparing step is not particularly limited as long as it is a step of disposing the separators 110 on both surfaces of the negative electrode 120, and for example, a roll-to-roll method can be used.

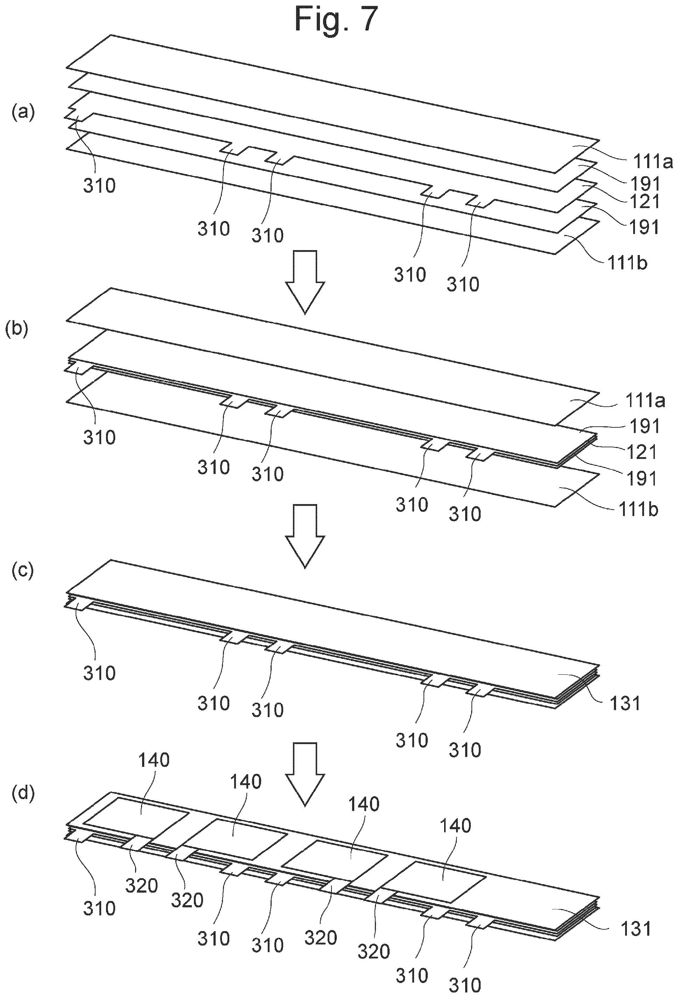

In the present embodiment, as shown in (a) of Fig. 7, in addition to the negative electrode sheet 121, the first separator sheet 111a, and the second separator sheet 111b, a buffering function layer sheet 191 having a material constituting the buffering function layer 190 is prepared, and these are bonded to each other to form the sheet 131 as shown in (c) of Fig. 7. The step of forming the sheet 131 is the same as that of Embodiment 1.

Next, the positive electrode 140 is disposed on the sheet 131 at a predetermined interval as shown in (d) of Fig. 7. The steps after this step are the same as those in Embodiment 1.

### Examples

Hereinafter, the present invention will be described in detail using Examples and Comparative Examples. The present invention is not limited by the following Examples.

### [Example 1]

As a negative electrode sheet, a Cu substrate having a thickness of 8 µm was prepared. A negative electrode terminal was attached to the negative electrode sheet by bonding an Ni terminal by ultrasonic welding in advance. As the first separator sheet and the second separator sheet, a separator (thickness: 15 µm) having a surface coated with a mixture of polyvinylidene fluoride (PVDF) and Al₂O₃ was prepared. The negative electrode sheet was sandwiched between the first and second separator sheets, and pressed in the thickness direction of the sheet to obtain a sheet in which the separators were disposed on both surfaces of the negative electrode.

96 parts by mass of LiNi_{0.8}Co_{0.15}Al_{0.05}O₂ as a positive electrode active material, 2 parts by mass of carbon black as a conductive aid, and 2 parts by mass of polyvinylidene fluoride (PVDF) as a binder were mixed with N-methyl-pyrrolidone (NMP) as a solvent, and the mixture was applied to both surfaces of a 12 µm Al foil and press-molded. The molded product thus obtained was punched into a predetermined size to obtain a positive electrode. Furthermore, the positive electrode terminal was attached in advance to the Al foil by bonding the Al terminal by ultrasonic welding. The obtained positive electrode was charged at a current equivalent to 0.1 C until the positive electrode reached 4.2 V (vs. the lithium metal counter electrode), and then discharged until the positive electrode reached 3.0 V (vs. the lithium metal counter electrode), thereby obtaining a discharge capacity of the positive electrode of 4.8 mAh/cm².

Next, the positive electrode prepared above was disposed on a sheet in which the first and second separator sheets were disposed on both surfaces of the negative electrode sheet, and the state of (c) of Fig. 2 was obtained.

Next, the sheet on which the positive electrode was disposed was placed in an automatic winding device and wound in order from the end part, thereby obtaining a structure in which the positive electrode was disposed in each gap of the laminate shown in Fig. 1. Then, this was inserted into the exterior body of the laminate. Furthermore, the number of laminations of the laminate was adjusted so that the initial capacity of the obtained secondary battery was 10 Ah.

In addition, a 4 M solution of LiN(SO₂F)₂ (hereinafter also referred to as "LFSI") in dimethoxyethane (hereinafter also referred to as "DME") was injected into the exterior body as an electrolyte solution. The exterior body was sealed to obtain a secondary battery.

### [Example 2]

A negative electrode sheet, a first separator sheet, and a second separator sheet were prepared in the same manner as in Example 1, and a buffering function layer was prepared on a surface of each of the first separator sheet and the second separator sheet, which was in contact with the negative electrode sheet. The buffering function layer was formed on one surface of the separator as follows.

A resin solution obtained by dissolving a PVDF resin in N-methylpyrrolidone (NMP) was applied onto the separator with a bar coater. Next, the separator onto which the resin solution had been applied was immersed in a water bath and then sufficiently dried at room temperature to form a fibrous, ionically conductive layer on the separator (it should be noted that the ionically conductive layer exhibits an ionically conductive function in a case where an electrolyte solution (a 4 M solution of LiN(SO₂F)₂(LFSI) in dimethoxyethane (DME)) which will be described later is injected into the layer during the assembly of the battery).

An average fiber diameter of the fibrous, ionically conductive layer formed on the separator was observed and measured with a scanning electron microscope (SEM), and was found to be 100 nm.

Then, Ni was vapor-deposited under vacuum conditions on the separator having a fibrous, ionically conductive layer formed thereon. The ionically conductive layer after the vapor deposition of Ni was observed with an SEM equipped with an energy dispersion type X-ray analyzer (EDX), and it was thus confirmed that the Ni was distributed to cover the fibrous, ionically conductive layer, and a fibrous buffering function layer in which the surface of the fibrous, ionically conductive layer was covered with the electrically conductive layer was obtained.

In addition, a section of the buffering function layer was manufactured with FIB and observed by SEM, and the average thickness of the buffering function layer was found to be 10 µm. As a result of the observation of the buffering function layer with a transmission electron microscope, the average thickness of the thin Ni film, that is, the electrically conductive layer, and the porosity of the buffering function layer were found to be 20 nm and 90%, respectively.

The negative electrode sheet, the first separator sheet having the buffering function layer, and the second separator sheet were laminated to obtain a laminate shown in (c) of Fig. 7. Thereafter, a structure shown in Fig. 5 was obtained in the same manner as in Example 1, and inserted into the exterior body of the laminate. Furthermore, the number of laminations of the laminate was adjusted so that the initial capacity of the obtained secondary battery was 10 Ah.

### [Comparative Example 1]

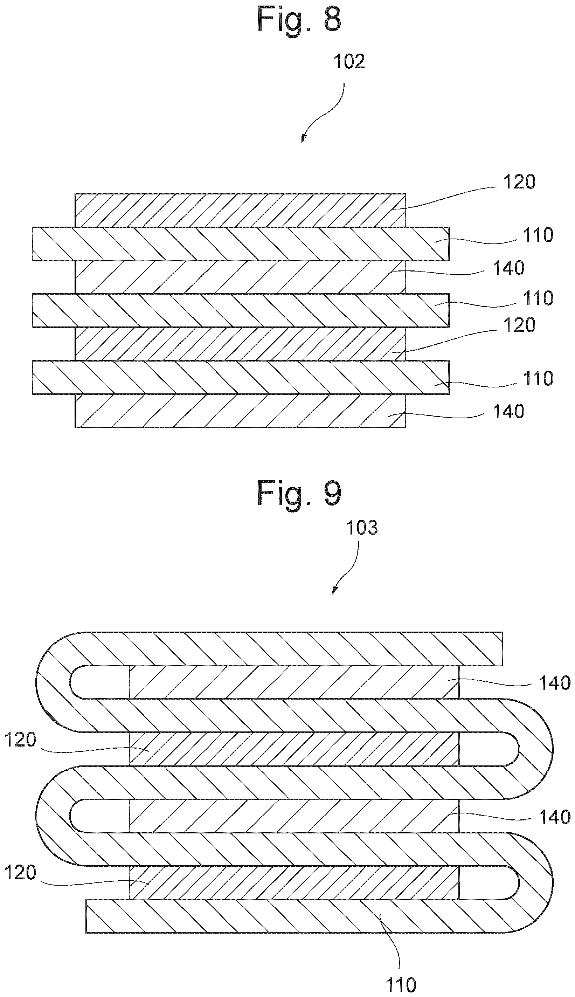

Sheets having the same configurations as the negative electrode sheet, the first separator sheet, and the second separator sheet used in Example 1 were each prepared in a size suitable for laminating the sheets with the positive electrode. Such positive electrode, negative electrode, and separator sheets were placed in an automatic laminating device and laminated in order to obtain a laminate as shown in Fig. 8, and the laminate was inserted into the exterior body for the laminate to obtain a secondary battery 102. Furthermore, the number of laminations of the laminate was adjusted so that the initial capacity of the obtained secondary battery was 10 Ah.

### [Comparative Example 2]

The same separator sheets as the first separator sheet and the second separator sheet used in Example 1, and the positive electrode were prepared. Further, a negative electrode having the same configuration as the negative electrode sheet used in Example 1 was prepared in an appropriate size in the same manner as in Comparative Example 1.

Next, the separator sheet was placed in an automatic laminating device, and while the separator sheet was automatically folded at an acute angle a plurality of times, the positive electrode and the negative electrode were alternately disposed between the facing separator sheets, thereby obtaining a laminate having a zigzag structure (also referred to as a "zigzag folded structure") as shown in Fig. 9.

Furthermore, in this step, the automatic laminating device repeated a step of pressing the first flat plate against the sheet from a first direction perpendicular to the lamination direction of the laminate, and pressing the second flat plate against the separator sheet from a second direction opposite to the first direction, while pressing the separator sheet from an opposite direction to the lamination direction of the laminate to fold the separator sheet, and then removing the first flat plate and the second flat plate. As a result, the separator sheet was automatically alternately folded at an acute angle a plurality of times. Furthermore, in the step, the separator sheet was folded while applying tension in the major axis direction. In addition, the number of laminations of the laminate was adjusted so that the initial capacity of the obtained secondary battery was 10 Ah.

Next, the positive electrode and the negative electrode prepared above were each alternately inserted into each gap of the laminate obtained as described above. As described above, a structure in which the positive electrode 140 and the negative electrode 120 are alternately disposed in each gap of the separator 110 in the separator sheet as shown in Fig. 9 was obtained. Then, this was inserted into the exterior body of the laminate to obtain a secondary battery 103.

### [Comparative Example 3]

A sheet obtained by laminating the negative electrode sheet, the first separator sheet, and the second separator sheet used in Example 1, and a positive electrode were prepared.

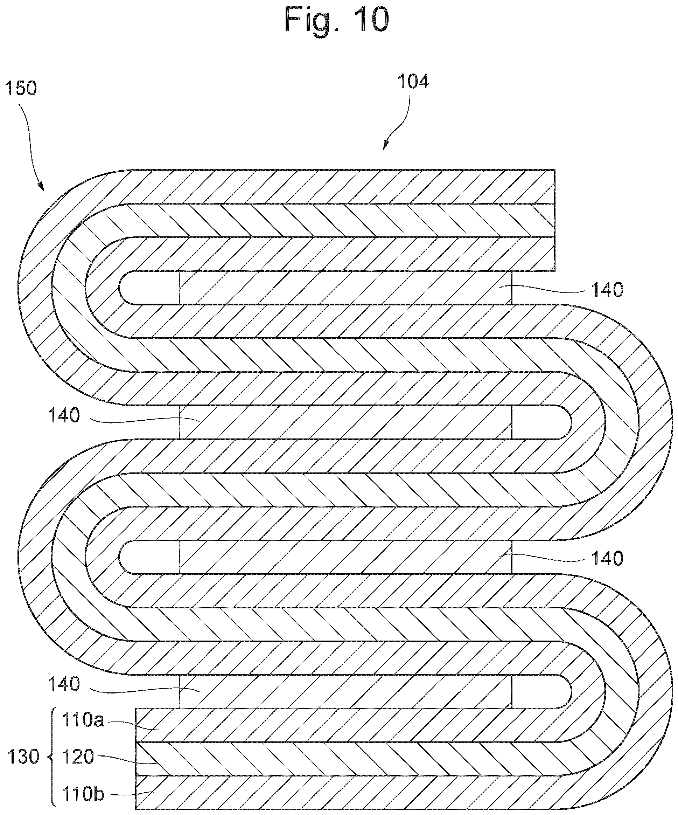

Next, this sheet was placed in an automatic laminating device, and the sheet was automatically alternately folded at an acute angle a plurality of times to dispose the positive electrode between the facing separator sheets, thereby obtaining a laminate having a zigzag structure as shown in Fig. 10. The step of forming a laminate with the automatic laminating device is the same as that in Comparative Example 2, except that the separator sheet is replaced with the sheet of the present Comparative Example.

Next, the positive electrodes prepared described above were respectively inserted into each gap of the laminate obtained as described above. As described above, a structure in which the positive electrode 140 was disposed in each gap of the separator 110 as shown in Fig. 10 was obtained. Then, this was inserted into the exterior body of the laminate to obtain a secondary battery 104.

### [Evaluation]

The time required to assemble the secondary batteries of Examples and Comparative Examples, and the volume expansion rate of the cell in a discharged state after performing 20 charging-and-discharging cycles of charging and discharging these secondary batteries are shown in Table 1.

Furthermore, the time required to assemble the secondary battery was measured from a state where the positive electrode was disposed on the sheet in Examples 1 and 2. In Comparative Examples 2 and 3, the measurement was performed in a state where the sheet was prepared. In addition, in each of Examples and Modification Examples, the measurement was stopped at a point in time when the formation of the laminate was completed.

**[Table 1]**

| | Time required for assembly (seconds) | Volume expansion rate of cell in discharged state after 20 cycles (%) |
|---|---|---|
| Comparative Example 1 | 90 | 21 |
| Comparative Example 2 | 45 | 22 |
| Comparative Example 3 | 170 | 25 |
| Example 1 | 20 | 18 |
| Example 2 | 20 | 11 |

As shown in Table 1, in Examples 1 and 2, the volume expansion rates in the discharged state after performing 20 charging-and-discharging cycles were 18% and 11%, respectively, and good results were obtained. In addition, it was confirmed that the time required for the manufacture was 20 seconds and the laminate could be formed in a short time, as compared with Examples.

The secondary battery of the present invention has high energy density and capacity, and is excellent in cycle characteristics so that the secondary battery has industrial applicability as a power storage device to be used for various uses.

### Reference Signs List

- 100, 101: Secondary battery
- 110: Separator
- 120: Negative electrode
- 130, 131: Sheet
- 140: Positive electrode
- 150, 151: Laminate
- 160: Folded-back part
- 170: Planar part
- 180: Winding end part
- 190: Buffering function layer
- 310: Negative electrode terminal
- 320: Positive electrode terminal

## Claims

1. A secondary battery comprising:
a laminate formed by winding a sheet having a negative electrode and separators disposed on both surfaces of the negative electrode so that the sheet is folded back a plurality of times; and
a plurality of positive electrodes that are respectively disposed in each gap formed between the separators facing each other in the laminate.

2. The secondary battery according to claim 1,
wherein the negative electrode practically has no negative electrode active material.

3. The secondary battery according to claim 1,
wherein the sheet includes buffering function layers that are respectively disposed between the negative electrode and the separators disposed on both surfaces of the negative electrode.

4. The secondary battery according to claim 3,
wherein the buffering function layer has a higher porosity than the separator.

5. The secondary battery according to claim 3,
wherein a porosity of the buffering function layer is 50% or more and 97% or less.

6. The secondary battery according to claim 3, further comprising:
an electrolyte solution in which the separator is immersed.

7. The secondary battery according to claim 3,
wherein the negative electrode is formed of at least one or more selected from the group consisting of a metal which does not react with Cu, Ni, Ti, Fe, and Li, an alloy of the metal, and stainless steel.

8. The secondary battery according to claim 3,
wherein the positive electrode is disposed to be spaced at a distance of 0.01 mm or more and 5 mm or less from a folded-back part of the sheet in the laminate.

9. The secondary battery according to claim 3,
wherein the negative electrode has an average thickness of 1 µm or more and 30 µm or less.

10. The secondary battery according to claim 4,
wherein the buffering function layer has an average thickness of 100 µm or less, a void ratio of 50% or more and 97% or less, and a weight per area of 10 g/m² or less.

11. A method for manufacturing a secondary battery, the method comprising:
preparing a sheet having a negative electrode, and separators disposed on both surfaces of the negative electrode;
disposing a plurality of positive electrodes on the sheet along a longitudinal direction of the sheet; and
winding the sheet on which the positive electrodes are disposed, to form a state where the positive electrodes are respectively disposed in each gap formed between the separators facing each other.

12. The method for manufacturing a secondary battery according to claim 11,
wherein the sheet includes buffering function layers that are respectively disposed between the negative electrode and the separators disposed on both surfaces of the negative electrode.
